# EUROPEAN PATENT SPECIFICATION

(11) **EP 1 065 614 B1**
(45) Date of publication and mention of the grant of the patent: **27.07.2005**
(21) Application number: 00303531.8
(22) Date of filing: 27.04.2000
(51) Int. Cl.: G06F 17/60

(54) **Method for tailoring services and service-tailoring devices**
Verfahren und Geräte zum Anpassen von Dienstleistungen
Méthode et dispositifs pour façonner des services

(30) Priority: 30.06.1999 JP 18580499
(43) Date of publication of application: 03.01.2001
(73) Proprietor: FUJITSU LIMITED, Kawasaki-shi, Kanagawa 211-8588 (JP)
(72) Inventor: Kohda, Youji, c/o Fujitsu Limited, Kawasaki-shi, Kanagawa 211-8588 (JP); Sugano, Hiroyasu, c/o Fujitsu Limited, Kawasaki-shi, Kanagawa 211-8588 (JP); Mitsuoka, Madoka, c/o Fujitsu Limited, Kawasaki-shi, Kanagawa 211-8588 (JP); Otani, Koji, c/o Fujitsu Limited, Kawasaki-shi, Kanagawa 211-8588 (JP); Ono, Takashi, c/o Fujitsu Limited, Kawasaki-shi, Kanagawa 211-8588 (JP); Kawaguchi, Naohisa, c/o Fujitsu Limited, Kawasaki-shi, Kanagawa 211-8588 (JP); Iwakawa, Akinori, c/o Fujitsu Limited, Kawasaki-shi, Kanagawa 211-8588 (JP)
(74) Representative: Hitching, Peter Matthew

(56) References cited:
- WO-A-97/41654
- WO-A-98/16045
- WO-A-99/08434
- COPPS A: "Fridge that does your shopping" SCREENFRIDGE PRESS RELEASES, 10 February 1999 (1999-02-10) - 22 March 1999 (1999-03-22), XP002135428
- ICQ: "ICQ 99a, Online help" ANNOUNCEMENT ICQ, 1998, XP002163918
- ESCHENBURG A: "WO LAUFEN SIE DENN? ICQ HAELT VERBINDUNG ZU BEKANNTEN" CT MAGAZIN FUER COMPUTER TECHNIK, VERLAG HEINZ HEISE GMBH., HANNOVER, DE, no. 22, 26 October 1998 (1998-10-26), pages 92-95, XP000779803 ISSN: 0724-8679

## Description

The present invention relates to a technology for effectively providing services via a network to users on the network.

In the following description, status notification devices are devices that can store user status, and can send to and receive from one another user status in real time via a network. The user status may be set by the user using an input means, or may be automatically detected. ICQ, for example, which can send and receive user status on the Internet, can be cited as an example of a status notification device.

ICQ is a device for intercommunication via the Internet, and for exchange-reporting self-status. ICQ receives local user-set status for reporting to other users. In addition, ICQ acquires the Internet connection status of other users.

The provision and advertising of services on networks like the Internet is becoming commonplace these days. For example, in consulting Web pages, advertising commonly is found inserted in addition to the information originally sought. The point of difference from conventional advertising that uses television and newspapers is that advertising on a Web page has interactive characteristics. For example, if a user clicks an advertising part with a mouse, detailed service content is displayed. On the other hand, common to conventional advertising and Web page advertising is that both passively expect numerous consumers will view the advertisements and take an interest in the advertised products.

The provision and advertising of services specially tailored to Internet users' attributes and needs has recently drawn attention. The technique of providing and advertising services to accord with users is called customization or personalization, which has been practiced in the past. These techniques are important to the Internet, and can be implemented for numerous customers, without increasing costs, by the use of Internet technology. Customization and personalization on the Internet have been advocated by Don Peppers and Martha Rogers, and is generally referred to as "one-to-one marketing."

If the technique of one-to-one marketing is adopted, service content tailored to users is displayed even if different users consult a Web page with the same URL (uniform resource locator). Eventually, service content tailored to every user will be displayed on Web pages. Various methods have been considered as arrangements for tailoring services to users, such as rule-based methods, methods that employ a collaboration filter, and methods that employ neural networks. However, each of these methods has a passive characteristic, as in the Web page advertising discussed above, of waiting for a Web page to be browsed by someone.

On the other hand, a method has also been considered that adds advertising to the information desired by a user and delivers it directly to the user. For example, one such method is an electronic mail magazine, which periodically delivers news to a user by electronic mail. In a mail magazine, information and advertising can also be tailored to users. However, the provision of information from the user is usually limited to the point in time when the user subscribes to the mail magazine. Consequently, it is difficult to tailor advertising and information to the details of the news, which varies with time. Furthermore, users do not necessarily read the contents of the mail magazine. Consequently, the service provider faces the problem of not knowing whether the user was actually informed of the existence of its services.

It is therefore desirable to provide a technology for apprehending customer status in fine detail and, based on customer status, to advertise and provide services effectively.

WO 98 16045A discloses a method and a device according to the preamble of the relevant independent claims. Users on a network are monitored to establish their connection status regardless of which communication terminal they happen to be using, and when one user wishes to communicate with a subset of the other users, he or she sends a list to a server, the list being checked against those users currently connected, details of which (e.g. e-mail addresses) being returned to the requesting user.

According to a first aspect of the invention, there is provided a service-tailoring method employing a communications network together with a user's status notification device for reporting status information including at least its network connection status, the method comprising: storing predetermined information on the user; collecting information on the user, and administrating the stored user information based on the collected user information; determining based on status reported from the status notification device whether it is time to provide a service, and sending the determination results externally; and executing output in accordance with the results of said determining step, said executed output being tailored to the user based on the stored user information and providable service content; characterised in that: said collecting step includes collecting information on previously-executed output to the user and/or information on whether or not the user has accessed the previously-executed output.

According to a second aspect of the invention, there is provided a service-tailoring device operable together with a communications network and a status notification device, the status notification device reporting information including at least its network connection status, the service-tailoring device comprising: storage means for storing predetermined information on the user; administering means for collecting information on the user, and updating the storage means based on the collected user information; decision means for judging based on status reports from the status notification device whether it is time to provide a service; and output means for executing output in accordance with the results of the decision, said executed output being tailored to the user based on the user information stored in said storage means and providable service content; characterised in that: said administering means is operable to collect information on previously-executed output to the user and/or information on whether or not the user accessed the previously-executed output.

The present invention further provides a program for carrying out the above method, as well as a system comprising the above device in combination with a plurality of status notification devices.

In an embodiment of the present invention, the user status can be inferred from the status of the status notification device. If it is judged from the user status that a user can use a service, the result of the judgment can be sent externally. The service provider can then provide service based on the results of the judgment, obtain verification of whether it is all right to provide the service, and the like.

As mentioned above, the service-tailoring device is provided with storage means, management means, judgment means and output means. The storage means stores predetermined user information. The management means collects the user information, and updates the storage means based on the collected user information. The judgement means, based on the status notification from the other status notification device, judges whether it is time to provide the service. The output means, in accordance with the results of the judgment, performs output based on the user information stored in the storage means and the service content that can be provided.

For example, consider a service that provides home delivery in accordance with the at-home status of the user. A service-tailoring device and a status notification device can be provided on an information terminal of the home delivery carrier. A status notification device can be provided on the information terminal of the user. The status notification device can report the status of the user, such as "Connected" and "Not home". In addition, the storage means of the service-tailoring device can store predetermined user information, such as the name, address and telephone number. In addition, user information entered by the home delivery carrier, such as the number of the package for the user and the delivery status (delivered/undelivered) of the package, can also be stored. The management means can collect and update user information by some means other than the status notification device.

The judgement means judges, for example based on whether the status notification device on the user terminal is in a communication-capable state, whether it is time to provide a service. For example, it judges whether the user is at home. The judgment means can also perform this judgment based on status notification from a plurality of status notification means. If the user is at home, the output means can notify the home delivery carrier that the user is at home, in addition to the package numbers of undelivered packages, the user telephone number, and the like. For example, the output means could display on the display of the information terminal a message like "Package #1 for Taro Fujitsu can be delivered. The telephone number is 01-234-5678." Based on this message, the home delivery carrier can make a telephone call to verify whether it is alright to make a delivery now. The output means can also automatically dial up the user.

A service-tailoring system embodying the invention is preferably further provided with a receiving device operable together with the status notification devices

The receiving device can receive messages from a service-tailoring device via the status notification device, and can accept instructions with respect to the message and can send the instructions to the service-tailoring device. In addition, in this system, the service-tailoring device further has a messaging means that, between the receiving devices, sends predetermined messages and receives responses to the messages.

Using the example above, the receiving device sends a message like "Is it all right to deliver a package now?" to Taro Fujitsu via the status notification device. In addition, the receiving device receives the input of the response to this message and sends it to the service-tailoring device via the status notification device.

The service-tailoring device creates this message by the messaging means, sends it and then stands by for a response. In accordance with the response, the output means, for example, displays "The first package can be delivered to Taro Fujitsu. The telephone number is 01-234-5678.

Consider the examples of a case wherein information is published on a Web page in accordance with the user. The output means, based on the user information and the publishable information, tailors the information to be published for each user. In addition, the output means sends to the Web page the adjusted information to be published.

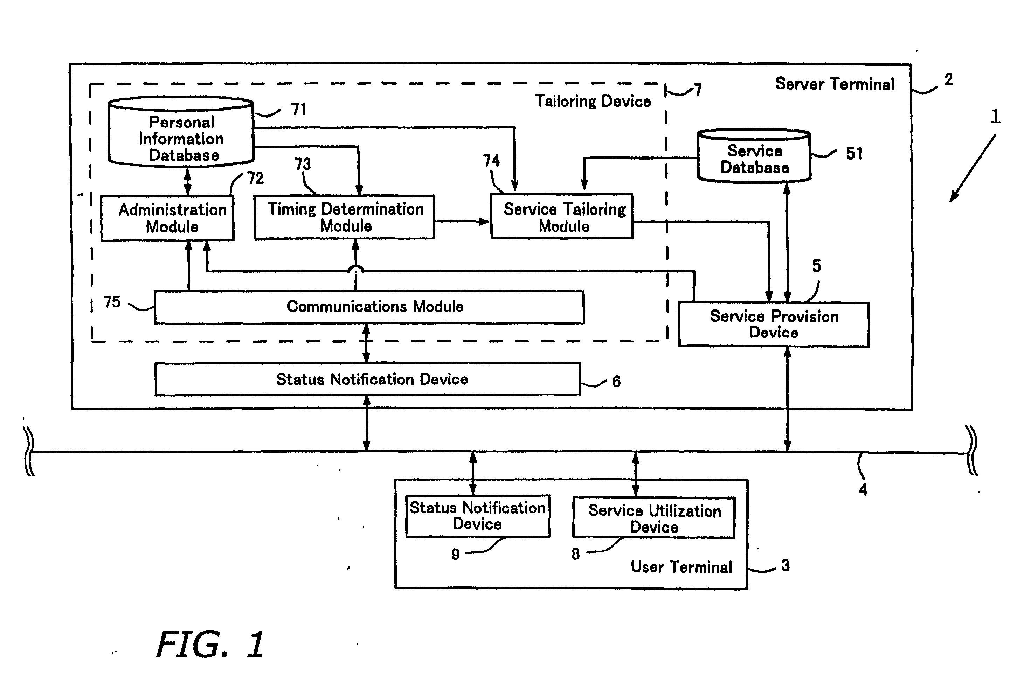

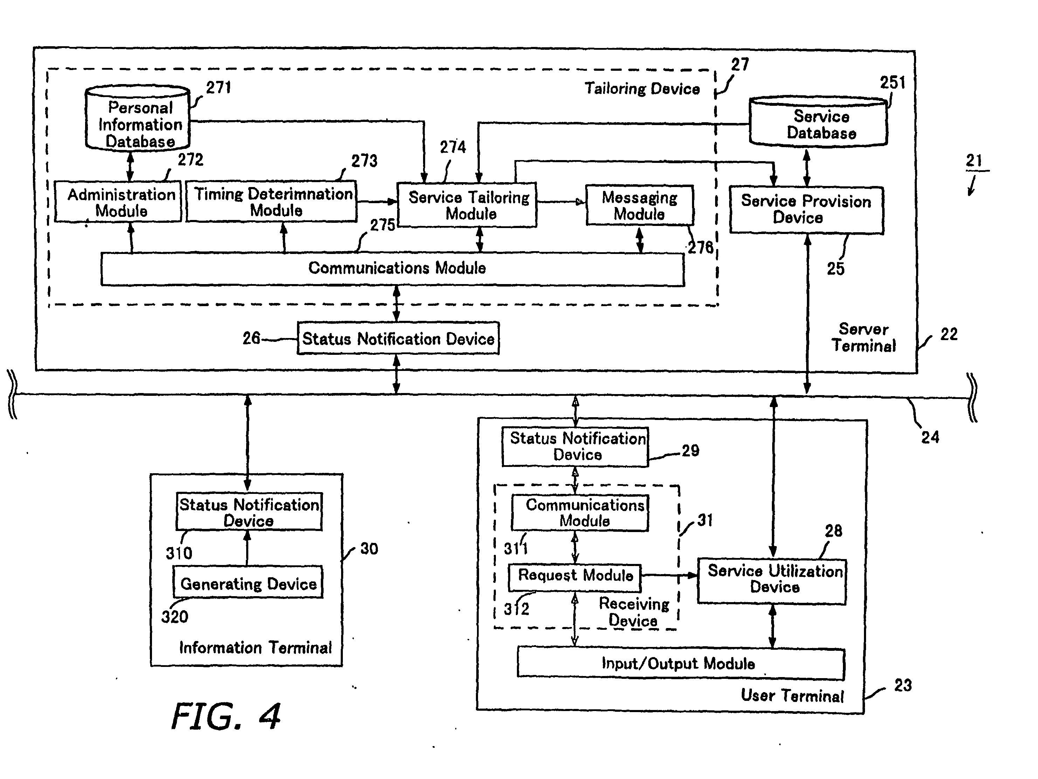

Reference will now be made, by way of example, to the accompanying drawings, in which Figures 1-3 illustrate an embodiment of the present invention, and Figures 4-7 illustrate an alternative system having a receiving device, which device may also be employed in the present invention.

In the drawings:
Fig. 1 is an overall block diagram of the service-tailoring system according to the embodiment;
Fig. 2 is a conceptual explanatory diagram of the personal information database in the system of Fig. 1;
Fig. 3 is a flowchart illustrating flow of processes performed by the tailoring device according to the embodiment;
Fig. 4 is an overall block diagram of an alternative service-tailoring system;
Fig. 5 is a conceptual explanatory diagram of a personal information database in the system of Fig. 4;
Fig. 6 is a flowchart illustrating flow of processes performed by the tailoring device according to the system of Fig. 4; and
Fig. 7 is a flowchart illustrating flow of processes performed by a receiving device according to the system of Fig. 4.

The following description explains in detail service-tailoring systems embodying the present invention, referencing the drawings.

### Overall Configuration

Fig. 1 is an overall block diagram of the service-tailoring system according to the embodiment. Service-tailoring system **1** is constituted by connecting server terminal **2** and user terminal **3** via network **4**. To facilitate the explanation, the present embodiment takes up the example of a service that distributes news to users in the form of electronic mail.

Server terminal **2** is provided with a commonly used service provision device **5**, status notification device **6,** and tailoring device **7**. An electronic mail distribution device for distributing news in the form of electronic mail can be used as service provision device **5**. The service resources that can be provided are stored in service database **51**. For example, the sports news and weather report and the like are stored in the service database for each day. Service provision device **5** collects news by whatever method, stores it in service database **51** and distributes it using an electronic mail device. Tailoring device **7** is discussed below.

User terminal **3** is provided with a commonly used service utilization device **8** and status notification device **9**. Service utilization device **8** is an device for using services provided from service provision device **5**. An electronic mail device for receiving news distributed in the form of electronic mail can be used as service utilization device **8**. In addition, service utilization device **8** may also be capable of reporting to service provision device **5** whether the news was read. For example, if a news file has been opened, service utilization device **8** sends to service provision device **5** a has-been-read notification that reports that the news has been read. If there is no function in service utilization device **8** to report whether the news has been read, the fact that the news has been sent is taken as it having been read.

Furthermore, status notification device **9** of user terminal **3** can report the user status to status notification device **6** of server terminal **2**. In addition, status notification device **9** can at least report, as the user status, whether communication via network **4** is possible. The explanation of the present embodiment assumes the use of ICQs as status notification devices **6**, **9.**

### Tailoring Device

Server terminal **2** has tailoring device **7**. Tailoring device **7** has personal information database **71**, administration module **72**, timing determination module **73**, service-tailoring module **74** and communications module **75**. In addition, tailoring device **7** shares service database **51** with service provision device **5**.

Service database **51** stores services that can be provided by service provision device **5**. Specifically, it stores for each day various types of news, such as the sports news, weather report, computer news and overseas news.

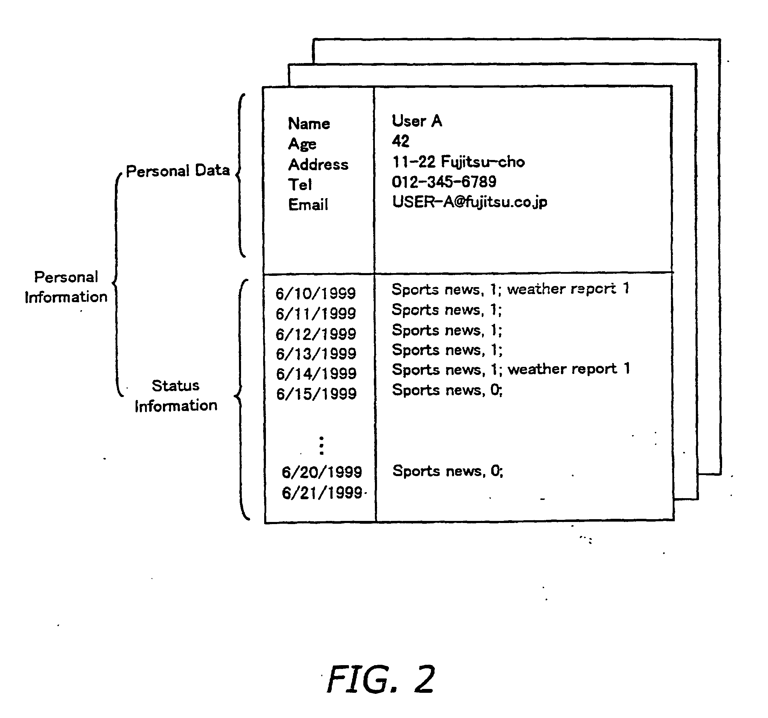

Personal information database **71** stores personal information for each user. Personal information includes user-specific information (hereinafter called personal data) and service-related user status (hereinafter called status information). Fig. 2 shows a conceptual explanatory diagram of personal information database **71**. Fig. 2 shows the personal information related to User A. The name, age, address, telephone number and electronic mail address are stored as the personal data. Personal data is information specified by the user him/herself. Personal data may be acquired from service provision device **5**, may be acquired from user terminal **3**, or may be acquired in advance by some other means. The personal data and status information vary by the service to be provided and by the user status that can be collected.

The news distributed to User A is stored each day as the status information. In addition, a flag that indicates whether the distributed news has been read is stored together with the distributed news. In the drawing, a flag of "0" indicates news that has not yet been read. A flag of "1" indicates news that has already been read. Whether User A has read the news can be learned from service provision device **5**, for example. The personal data and status information are suitably set depending on how the timing and content of the service to be provided are adjusted.

Administration module **72** acquires the personal information and writes it in personal information database **71**. If the personal data is sent from the user terminal, administration module **72** acquires the personal data from the user terminal via communications module **75** and status notification device **6**. In addition, administration module **72** acquires from service provision device **5** the service utilization result of the user, and writes it in personal information database **71** as status information. The service utilization result in the present embodiment is a has-been-read notification that reports what news was distributed to the user and the fact that the distributed news has been read.

Timing determination module **73** judges whether status notification device **9** on user terminal **3** is connected to network **4** via communications module **75**. If status notification device **9** is connected to network **4**, timing determination module **73** judges that the user is able to use the service.

Service-tailoring module **74** tailors, in accordance with the judgment of timing determination module **73**, the content of the service to be provided to the user. Service-tailoring module **74** sends the content of the adjusted service to service provision device **5**. The tailoring of the service content is performed based on the personal information and on the service resources stored in service database **51**. Consider the example of the case wherein the status information is as shown in Fig. 2. In Fig. 2, User A reads the sports news every day from June 10 to June 14, but does not subsequently read the news from June 15 to June 20. When providing service on June 21, service-tailoring module **74** acquires from the service database the sports news that has not been read. Subsequently, service-tailoring module **74** creates a summary of the sports news that has not been read. This summary is sent to service provision device **5** as the service content.

Communications module **75** monitors by status notification device **6** whether status notification device **9** on a predetermined user terminal is connected to network **4**, and reports the monitoring results to timing determination module **73**. User terminals whose connection status is monitored by communications module **75** are, for example, terminals of users that have concluded a contract to use the service. Communications module **75** acquires in advance from service provision device **5** the identification information that specifies the relevant user terminal. In addition, if personal data is sent from a user terminal, communications module **75** reports the received data to administration module **72.**

### Process Flow

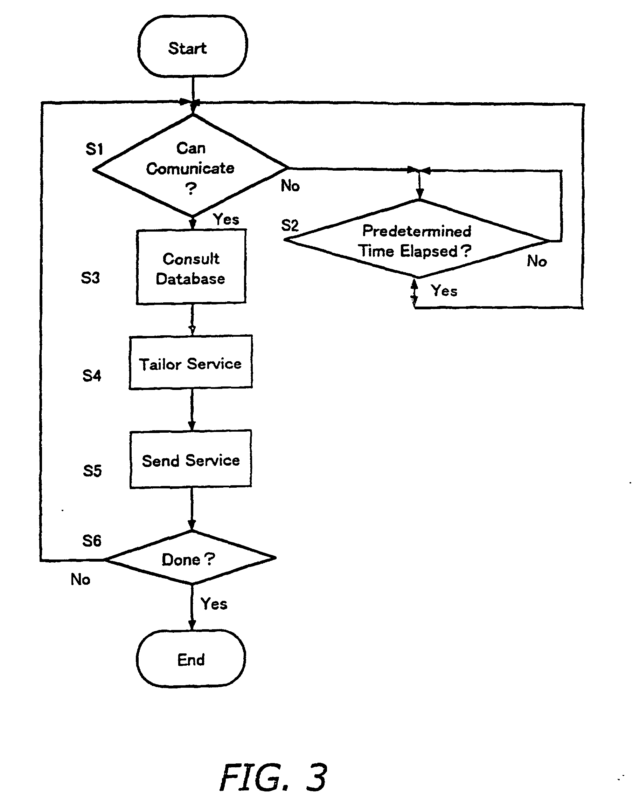

Fig. 3 is a flowchart showing the flow of processing performed by tailoring device **7.** The following processing starts by, for example, the activation of status notification device **6**.

In step S1, timing determination module **73** judges whether a predetermined user terminal can communicate by status notification device **9**. Specifically, timing determination module **73** judges whether status notification device **9** on the user terminal is connected to the network. If the determination is "No," the process flow goes to step S2. If the determination is "Yes," the process flow goes to step S3.

In step S2, timing determination module **73** stands by for the elapse of a predetermined time. If the predetermined time elapses, processing returns once again to step S1, wherein the determination is repeated.

In step S3, service-tailoring module **74** reads from personal information database **71** predetermined personal information for the relevant user. The read personal information varies by the service to be provided. In the present embodiment, unread news is read. In addition, service-tailoring module **74** consults the service database based on the fetched personal information, and reads the required service resource. In the case of the personal information shown in Fig. 2, for example, the required service resource is the sports news content not yet read by the user.

In step S4, service-tailoring module **74** tailors the read service resource based on the status information, and determines the service content to be provided. For example, service-tailoring module **74** creates a summary of the past sports news that has not been read, and sets it as the service content together with the sports news of the day.

In step S5, service-tailoring module **74** sends the adjusted service content to service provision device **5**. Service provision device **5** provides the received service content to service utilization device **8** by an ordinary method. For example, service utilization device **8** distributes to a user by an electronic mail device an electronic mail wherein is recorded a summary of the sports news and the latest sports news.

step S6 judges whether status notification device **6** is done. If the determination is "No," processing returns to step S1 where the processing discussed above is repeated. If the determination is "Yes," the process ends.

Furthermore, in addition to the processes discussed above, tailoring device **7** may also perform a routine that monitors the connection status of a predetermined information terminal, by communications module **75** at every of predetermined time intervals, and reports it to timing determination module **73**.

Furthermore, in addition to the processes discussed above, administration module **72** of tailoring device **7** performs a process that acquires predetermined status information from service provision device **5** and then updates personal information database **71**. Status information is what news was distributed to the user terminal and the has-been-read notification from the user terminal.

Fig. 4 is an overall block diagram of an alternative service-tailoring system 21. Connecting server terminal **22**, user terminal **23** and information terminal **30** via network **24** constitutes service-tailoring system **21.** Information terminal **30** is connected to network **24**, but is not particularly limited thereto as long as it can operate a status notification device. To facilitate the explanation, the present explanation considers a case wherein the information terminal is an electrical product that can connect to network **24**, e.g., a refrigerator. The explanation now takes up the example of a service that reports bargain foodstuffs based on the inventory status of the refrigerators on the network.

### Information Terminal

Information terminal **30** is connected to network **24** via status notification device **310**. In addition to status notification device **310**, information terminal **30** also has generating device **320**. Information terminal **30** monitors for a predetermined change in status by generating device **320**, and reports same to server terminal **22** via status notification device **310**. In the present example, generating device **320** detects the input and output of foodstuffs to and from the refrigerator. A bar code reader that reads bar codes affixed to the foodstuffs can be cited as a concrete example of generating device **320**. In addition, as long as generating device **320** can detect the status in accordance with the service to be provided, the various detection devices commonly used can be appropriately employed. For example, the detection of the open/close state of the door of the refrigerator by generating device **320** can form the basis for judging whether the user is at home.

### Server Terminal

Server terminal **22** is provided with service provision device **25**, status notification device **26** and tailoring device **27**. Service provision device **25** and status notification device **26** are the same as in the first embodiment.

Tailoring device **27** has personal information database **271**, administration module **272**, timing determination module **273**, service-tailoring module **274** and communications module **275**, as well as messaging part **276**.

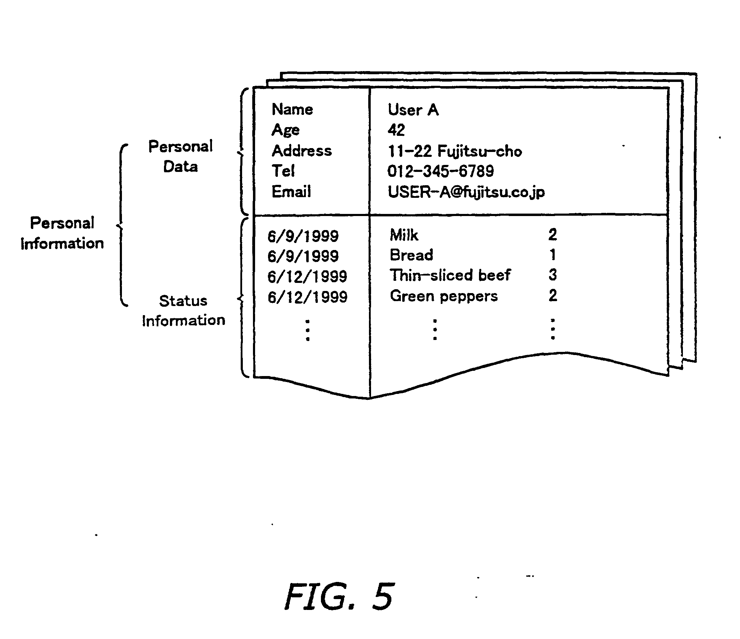

Personal information database **271** stores the personal data and status information discussed above. Fig. 5 shows a conceptual explanatory diagram of the personal information related to User A. In the present system, the personal data is the same as in the embodiment. However, the status information is stored along with the purchase day and date of the foodstuffs in the refrigerator of the user.

Administration module **272** receives changes in the inventory status from information terminal **30** via status notification device **26** and communications module **275**, and stores these as status information. In addition, administration module **272** acquires the personal data by some means, and stores it in the personal database. Personal data may be acquired from service provision device **25**, as discussed above, or may be acquired from user terminal **23**. In addition, it may also be acquired by other methods.

Timing determination module **273** judges whether to provide service to the user. This judgment is made based on the connection status of status notification device **29** of the user terminal. Specifically, timing determination module **273** acquires the connection status of status notification device **29** on the user terminal via status notification device **26**. If status notification device **29** is connected to Internet **24**, timing determination module **273** makes the determination to provide service. Timing determination module **273** reports the determination and the target user to service-tailoring module **274**.

Furthermore, timing determination module **273** can also make this judgment based on the status notifications from a plurality of status notification devices. For example, if the status notification on a user terminal is "Connected" and the door of information terminal **30** (refrigerator) has opened within the last ten minutes, timing determination module **73** makes the determination to provide the service. To make this judgment, a function to detect the opening and closing of the door must be provided beforehand in generating device **320** of information terminal **30**.

Service-tailoring module **274** tailors, in accordance with the notification from timing determination module **273**, the content of the message reported to the user. This tailoring is made based on personal information database **271** and the service database. In addition, service-tailoring module **274** instructs messaging part **276** to send a predetermined confirmation message. In accordance with the user response to the confirmation message, the service-tailoring module sends an adjusted message to service provision device **25**. The confirmation message is discussed below.

Specifically, service-tailoring module **274** tailors the information reported to the user based on the inventory status of the user and the bargain foodstuffs for the date and time at which the service is to be provided. For example, consider the case wherein the bargain foodstuffs on June **12** are milk, eggs and thin-sliced beef. It can be seen from the inventory status of User A shown in Fig. 5 that there are no eggs. Accordingly, service-tailoring module **274** makes the determination to set the message content to "Today, eggs are 150 yen per pack." Furthermore, if status notification device **26** can send and receive character messages, the message can also be sent to user terminal **23** via status notification device **26**.

Messaging part **276** sends to the user terminal a predetermined confirmation message in accordance with an instruction from service-tailoring module **274**. The confirmation message may be sent via status notification device **26**. For example, messaging part **276** sends a confirmation like "Would you like to know about today's bargain foods?" This is for confirming the preference of the user before providing the service.

Communications module **275** collects the inventory status from information terminal **30** via status notification device **26**, and reports it to administration module **272**. In addition, communications module **275** acquires via status notification device **26** the connection status of status notification device **29** on the user terminal, and reports it to timing determination module **273**. Furthermore, communications module **275** acquires via status notification device **26** the response from the user terminal to the confirmation message, and reports it to service-tailoring module **274**.

Conversely, communications module **275** sends via status notification device **26** to a predetermined user terminal the confirmation message from messaging part **276**. In addition, if service-tailoring module **274** sends the adjusted message via messaging part **276**, communications module **275** receives the message from service-tailoring module **274** and sends it to the user terminal via status notification device **26**.

### User Terminal

The user terminal has receiving device **31** in addition to service utilization device **28** and status notification device **29**. Furthermore, if the message created by the service-tailoring device is reported via status notification device **29**, the service utilization device is status notification device **29**.

Receiving device **31** has communications module **311** and request part **312**.

Communications module **311** acquires from status notification device **29** the confirmation message from messaging part **276**, and sends it to request part **312**.

Request part **312** reports to the user the confirmation message received via communications module **311**. For example, request part **312** displays a window with the received confirmation message on the display. In addition, request part **312** receives the input of the response to the confirmation message from the user. The inputted response is sent to server terminal **22** via communications module **311** and status notification device **29**. If status notification device **29** is an application separate from service utilization device **28**, request part **312** may activate service utilization device **28** in accordance with the inputted response.

### Process Flow

### (1) Flow of Processes Performed by Tailoring Device

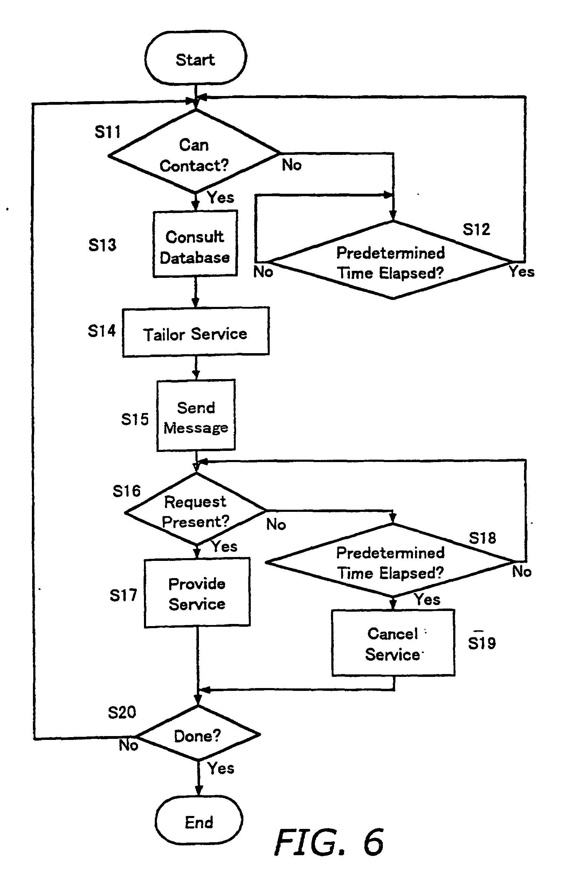

Fig. 6 is a flowchart showing the flow of processing performed by tailoring device **27** in the system of Fig. **4.** For example, the processing below starts by the activation of status notification device **26**.

First, in step S11, timing determination module **273** judges whether to provide service to the user. This judgment is made based on whether status notification device **29** on the user terminal is connected to Internet **24**. If the determination is "Yes," the process flow goes to step S13, discussed below. If it is judges "No," the process flow goes to step S12. Furthermore, this judgment can also be made by combining the connection status of status notification device **29** and the status of information terminal **30**. For example, the judgment is made in combination with whether the door has opened or closed within the past ten minutes. This judgment can be fine tuned as needed by basing the judgment on the status of a plurality of status notification devices, and the status reported from the generating device via the status notification device.

In step S12, timing determination module **273** stands by for the elapse of a predetermined time, and the process flow returns once again to step S11 wherein the determination is repeated.

In step S13, service-tailoring module **274** references personal information database **271** and service database **251**. Specifically, service-tailoring module **274** acquires from personal information database **271** the status information, namely the inventory status of the user's refrigerator. In addition, service-tailoring module **274** acquires from the service database the service resources that can be provided. A providable service resource is, for example, the bargain product of the day or a service product offered for a limited time.

In step S14, service-tailoring module **274** determines the service content suited to the user based on the inventory status of the user and the service resources that can be provided. For example, if a foodstuff that is not in the user inventory is a bargain product of that day, a message recommending that product is created. In addition, for example, if a foodstuff that a user likes can be inferred from the past inventory status of that user, a message may also be created that prompts the purchase of that foodstuff.

In step S15, messaging part **276** creates, based on an instruction from service-tailoring module **274**, a confirmation message that confirms whether it is all right to provide the service. Messaging part **276** sends to the user terminal the confirmation message via communications module **275** and status notification device **26**.

In step S16, service-tailoring module **274** judges, in accordance with the confirmation message, whether a request for service has been received. If the determination is "Yes," the process flow goes to step S17. If the determination is "No," the process flow goes to step S18, discussed below.

In step S17, service-tailoring module **274** sends the created message to service provision device **25**. Service provision device **25** provides the created message by a predetermined method. For example, the message is published on a predetermined Web page, sent in the form of electronic mail, or reported by voice via a telephone call.

In step S18, the service-tailoring module stands by for the elapse of a predetermined time, and the process flow goes to step S19 if the predetermined time elapses. Until the predetermined time elapses, the processing returns to step S17 where the judgment discussed above is repeated.

In step S19, the service-tailoring module stops the provision of service. The service-tailoring module preferably instructs messaging part **276** to report that the provision of service has been stopped. Messaging part **276**, which has received this instruction, reports to the user terminal via status notification device **26** a cancellation notification like, for example, "Reporting of the service will now be stopped."

Step S20 determines whether status notification device **26** is done. If the determination is "No," processing returns to step S11 where the processing discussed above is repeated. If the determination is "Yes," the process ends.

### (2) Flow of Processes Performed by Receiving Device

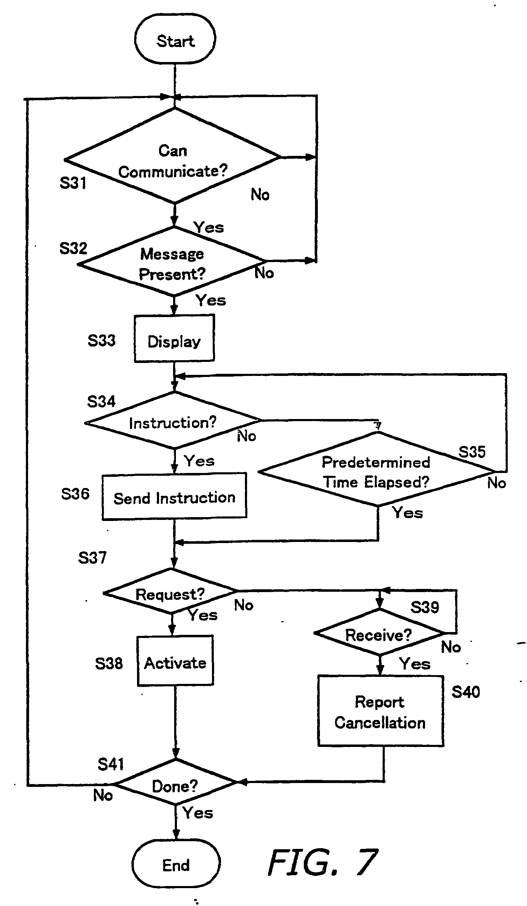

Fig. 7 is a flowchart showing the flow of processing performed by the receiving device. For example, the processing below starts with the activation of status notification device **29**.

In step S31, communications module **311** judges whether it is possible to communicate with status notification device **26** on the server terminal. Specifically, communications module **311** judges whether status notification device **29** is connected to network **24**. If the determination is "Yes," the process flow goes to step S32. If the determination is "No," it stands by until communication becomes possible.

In step S32, request part **312** judges whether a confirmation message has been received from server terminal **22**. If the determination is "Yes," the process flow goes to step S33. If the determination is "No," processing returns to step S31, where the processing discussed above is repeated.

In step S33, request part **312** displays the confirmation message from server terminal **22**, and receives the input of the response from the user.

In step S34, request part **312** judges whether an instruction from the user has been input. If the determination is "Yes," the process flow goes to step S36. If the determination is "No," the process flow goes to step S35.

In step S35, request part **312** judges whether the predetermined time has elapsed. If the determination is "No," processing returns to step S34, where the processing discussed above is repeated. If the determination is "Yes," the process flow goes to step S37, discussed below.

In step S36, request part **312** sends to the server terminal via status notification device **29** the inputted user instruction.

In step S37, request part **312** judges whether the inputted instruction is a service request. If it is a service request, the process flow goes to step S38. If it is not a service request, the process flow goes to step S39, discussed below.

In step S38, request part **312** activates service utilization device **28**. For example, if a service is provided in the form that publishes a message on a Web page, request part **312** activates a Web browser on user terminal **23**. However, if service utilization device **28** is already activated, this processing can be omitted. In addition, if receiving device **31** and service utilization device **28** do not exist on user terminal **23**, this processing is not performed. For example, the case can be cited in which service utilization device **28** is a telephone set independent of user terminal **23**.

In step S39, request part **312** judges whether a service cancellation notification has been received from server terminal **22**. If the determination is "Yes," the process flow goes to step S40. If the determination is "No," it stands by until one is received.

In step S40, request part **312** reports the cancel notification to the user by displaying it on a display and the like. Request part **312** clears the display if the user pushes the OK button, for example.

Step S41 determines whether status notification device **29** is done. If the determination is "No," processing returns to step S31, where the processing discussed above is repeated. If the determination is "Yes," the process ends.

The user name, telephone number, address and the like, the same as discussed above, are registered in the personal information database of the server terminal. In addition, identification information of the package that specifies the package scheduled to be delivered to the user may also be stored by whatever method. For example, if there is a system for managing packages for home delivery, it is conceivably possible to acquire information related to the package from this system.

The timing determination module judges whether the user is at home based on the status of the status notification device of the user terminal. If the user is at home and the timing determination module makes the judgment to place a telephone call, it reports predetermined information like the username and telephone number to the service-tailoring module.

The service-tailoring module automatically displays a message on the display and the like in accordance with the notification from the timing determination module. For example, it displays a message like "Package #1 can be delivered to Taro Fujitsu. The telephone number is 012-345-6789." The home delivery carrier, in accordance with this message, can make a telephone call to the user to confirm whether it is alright to make a delivery at this time. In addition, it is also conceivable to send the above discussed confirmation message prior to this phone call, or in place of this phone call.

Furthermore, if a voice communication function is provided in the server terminal, it is also possible to automatically dial the number for the confirmation telephone call.

An embodiment of the present invention can enable the dynamic and efficient provision and advertising of services in accordance with the real-time status of users.

While only a selected embodiment has been chosen to illustrate the present invention, to those skilled in the art it will be apparent from this disclosure that various changes and modifications can be made herein without departing from the scope of the invention as defined in the appended claims. Furthermore, the foregoing description of the embodiments according to the present invention is provided for illustration only, and not for the purpose of limiting the invention as defined by the appended claims.

Although the above description has referred to a program stored on a computer-readable medium, it will be appreciated that a program embodying the present invention need not be stored on a computer-readable medium and could, for example, be embodied in a signal such as a downloadable data signal provided from an Internet website.

## Claims

1. A service-tailoring method employing a communications network together with a user's status notification device for reporting status information including at least its network connection status, the method comprising:
storing predetermined information on the user;
collecting information on the user, and administrating the stored user information based on the collected user information;
determining based on status reported from the status notification device whether it is time to provide a service, and sending the determination results externally; and
executing output in accordance with the results of said determining step, said executed output being tailored to the user based on the stored user information and providable service content; **characterised in that**:
said collecting step includes collecting information on previously-executed output to the user and/or information on whether or not the user has accessed the previously-executed output.

2. A service-tailoring device (2, 22) operable together with a communications network (4, 24) and a status notification device (9, 29), the status notification device reporting information including at least its network connection status, the service-tailoring device comprising:
storage means (71, 271) for storing predetermined information on the user;
administering means (72, 272) for collecting information on the user, and updating the storage means (71, 271) based on the collected user information;
decision means (73, 273) for judging based on status reports from the status notification device whether it is time to provide a service; and
output means (74, 5; 274, 25) for executing output in accordance with the results of the decision, said executed output being tailored to the user based on the user information stored in said storage means and providable service content; **characterised in that**:
said administering means (72, 272) is operable to collect information on previously-executed output to the user and/or information on whether or not the user accessed the previously-executed output.

3. A service-tailoring system including status notification devices (9, 29) for exchange-reporting self-status via the network, and the service-tailoring device (2, 22) of claim 2.

4. The service-tailoring system set forth in claim 3, further comprising:
a receiving device (3, 23) enabled for receiving messages from a service-tailoring device (2, 22) via the status notification devices (9, 29), and enabled for accepting and sending to the service-tailoring device instructions with regard to the message; wherein
the service-tailoring device further has a messaging means (6, 26) that, between said receiving devices, sends predetermined messages and receives responses to said messages.

5. A service-tailoring program, for use in an information terminal wherein status notification devices for exchange-reporting self-status via a network are operable, which, when run on such an information terminal, causes the information terminal to execute the method of claim 1.

6. A program as claimed in claim 5, carried on a carrier medium.

7. A program as claimed in claim 6, wherein the carrier medium is a transmission medium.

8. A program as claimed in claim 6, wherein the carrier medium is a storage medium.

## Patentansprüche

1. Dienste zuschneidendes Verfahren, das ein Kommunikationsnetz zu-sammen mit einer Statusbenachrichtigungsvorrichtung eines Nutzers zum Melden von Statusinformationen einschließlich zumindest deren Netzverbindungsstatus einschließt, welches Verfahren die Schritte umfaßt:
Speichern vorbestimmter Informationen über den Nutzer;
Sammeln von Informationen über den Nutzer und Verwalten der gespeicherten Nutzerinformationen basierend auf der gesammelten Nutzerinformation;
auf der Basis des von der Statusbenachrichtigungsvorrichtung gemeldeten Status Bestimmen, ob es Zeit ist, einen Dienst anzubieten, und Senden der Bestimmungsergebnisse nach außen; und
Ausführen einer Ausgabe gemäß den Ergebnissen des Bestimmungsschritts, welche ausgeführte Ausgabe basierend auf den gespeicherten Nutzerinformationen und eines anbietbaren Dienstinhalts auf den Nutzer zugeschnitten ist; **dadurch gekennzeichnet, daß**:
der Sammelschritt ein Sammeln von Informationen über eine vorher ausgeführte Ausgabe an den Nutzer und/oder Informationen darüber, ob der Nutzer auf die vorher ausgeführte Ausgabe zugegriffen hat oder nicht, einschließt.

2. Dienste zuschneidende Vorrichtung (2, 22), die zusammen mit einem Kommunikationsnetz (4, 24) und einer Statusbenachrichtigungsvorrichtung (9, 29) betreibbar ist, welche Statusbenachrichtigungsvorrichtung Informationen meldet, die zumindest deren Netzverbindungsstatus einschließen, welche Dienste zuschneidende Vorrichtung umfaßt:
Speichermittel (71, 271) zum Speichern vorbestimmter Informationen über den Nutzer;
Verwaltungsmittel (72, 272) zum Sammeln von Informationen über den Nutzer und Aktualisleren des Speichermittels (71, 271) auf der Basis der gesammelten Nutzerinformationen;
Entscheidungsmittel (73, 273), um auf der Basis von Statusmeldungen von der Statusbenachrichtigungsvorrichtung zu beurkeilen, ob es Zeit ist, einen Dienst anzubieten; und
Ausgabemittel (74, 5; 274, 25) zum Ausführen einer Ausgabe gemäß den Ergebnissen der Entscheidung, welche ausgeführte Ausgabe basierend auf den im Speichermittel gespeicherten Nutzerinformationen und des anbietbaren Dienstinhalts auf den Nutzer zugeschnitten ist; **dadurch gekennzeichnet, daß**:
das Verwaltungsmittel (72, 272) betreibbar ist, um Informationen über eine vorher ausgeführte Ausgabe an den Nutzer und/oder Informationen darüber zu sammeln, ob der Nutzer auf die vorher ausgeführte Ausgabe zugriff oder nicht.

3. Dienste zuschneldendes System, das Statusbenachrichtigungsvorrichtungen (9, 29) zum wechselseitigen Melden des eigenen Status über des Netz und die Dienste zuschneidende Vorrichtung (2, 22) nach Anspruch 2 einschließt.

4. Dienste zuschneidendes System nach Anspruch 3, ferner mit:
einer Empfangsvorrichtung (3, 23), die dazu befähigt ist, Meldungen von einer Dienste zuschneidenden Vorrichtung (2, 22) über die Statusbenachrichtigungsvorrichtungen (9, 29) zu empfangen, und dazu befählgt ist, Anweisungen bezüglich der Meldung zu akzeptieren und an die Dienste zuschneidende Vorrichtung zu senden; worin
die Dienste zuschneidende Vorrichtung ferner ein Meldemittel (6, 26) aufweist, das zwischen den empfangenden Vorrichtungen vorbestimmte Meldungen sendet und Antworten auf die Meldungen empfängt.

5. Dienste zuschneidendes Programm zur Verwendung in einem Informationsendgerät, worin Statusbenachrichtigungsvorrichtungen zum wechselseitigen Meiden des eigenen Status über das Netz betreibbar sind, das, wenn es auf solch einem Informationsendgerät läuft, das Informationsendgerät veranlaßt, das Verfahren nach Anspruch 1 auszuführen.

6. Programm nach Anspruch 5, das auf einem Trägermedium liegt.

7. Programm nach Anspruch 6, wobei das Trägermedium ein Übertragungsmedium ist.

8. Programm nach Anspruch 6, wobei das Trägermedium ein Speichermedium ist.

## Revendications

1. Méthode pour façonner des services utilisant un réseau de communications conjointement à un dispositif de notification d'état d'utilisateur pour rapporter des informations d'état comprenant au moins son état de connexion au réseau, la méthode comprenant :
mémorisation d'informations prédéterminées sur l'utilisateur ;
collecte d'informations sur l'utilisateur et administration des informations d'utilisateur mémorisées sur la base des informations d'utilisation collectées ;
détermination sur la base de l'état rapporté à partir du dispositif de notification d'état s'il est temps de fournir un service et envoi des résultats de détermination à l'extérieur ; et
exécution une sortie en fonction des résultats de ladite étape de détermination, ladite sortie exécutée étant façonnée pour l'utilisateur sur la base des informations d'utilisateur mémorisées et du contenu de service pouvant être fourni ;
**caractérisé en ce que** :
ladite étape de collecte comprend la collecte d'informations sur une sortie exécutée précédemment à l'utilisateur et/ou des informations sur le fait que l'utilisateur a ou non accédé à la sortie exécutée précédemment.

2. Dispositif pour façonner des services (2, 22) utilisables conjointement à un réseau de communications (4, 24) et un dispositif de notification d'état d'utilisateur (9, 29) pour rapporter des informations d'état comprenant au moins son état de connexion au réseau, le dispositif pour façonner des services comprenant :
des moyens de stockage (71, 271) pour mémoriser des informations prédéterminées sur l'utilisateur ;
des moyens d'administration (72, 272) pour collecter des informations sur l'utilisateur et mettre à jour les moyens de stockage (71, 271) sur la base des informations d'utilisation collectées ;
des moyens de décision (73, 273) pour juger sur la base des rapports d'état provenant du dispositif de notification d'état s'il est temps de fournir un service ; et
des moyens de sortie (74, 5 ; 274, 25) pour exécuter une sortie en fonction des résultats de la décision, ladite sortie exécutée étant façonnée pour l'utilisateur sur la base des informations d'utilisateur mémorisées dans lesdits moyens de stockage et du contenu de service pouvant être fourni ;
**caractérisé en ce que** :
lesdits moyens d'administration (72, 272) sont utilisables pour collecter des informations sur une sortie exécutée précédemment à l'utilisateur et/ou des informations sur le fait que l'utilisateur a ou non accédé à la sortie exécutée précédemment.

3. Système pour façonner des services comprenant des dispositifs de notification d'état d'utilisateur (9, 29) pour rapporter par échange le propre état via le réseau et le dispositif pour façonner des services (2, 22) de la revendication 2.

4. Système pour façonner des services selon la revendication 3, comprenant en outre :
un dispositif de réception (3, 23) validé pour recevoir des messages provenant d'un dispositif pour façonner des services (2, 22) via les dispositifs de notification d'état (9, 29) et validé pour accepter et envoyer au dispositif pour façonner des messages des instructions par rapport au message ; dans lequel
le dispositif pour façonner des services a en outre un moyen de messagerie (6, 26) qui, entre lesdits dispositifs de réception, envoie des messages prédéterminés et reçoit des réponses auxdits messages.

5. Programme pour façonner des services, pour l'utilisation dans un terminal informatique dans lequel des dispositifs de notification d'état d'utilisateur pour rapporter par échange le propre état via le réseau sont utilisables, lequel, quand il tourne sur un tel terminal informatique, force le terminal informatique à exécuter la méthode de la revendication 1.

6. Programme selon la revendication 5, supporté sur un moyen de support.

7. Programme selon la revendication 6, dans lequel le moyen de support est un support de transmission.

8. Programme selon la revendication 6, dans lequel le moyen de support est un support de stockage.
